# FASCICULE DE BREVET EUROPEEN

(11) **EP 2 104 656 B1**
(45) Date de publication et mention de la délivrance du brevet: **16.06.2010**
(21) Numéro de dépôt: 07871881.4
(22) Date de dépôt: 06.12.2007
(51) Int. Cl.: C04B 41/89, F23R 3/00, F01D 5/28

(54) **PIECE EN MATERIAU COMPOSITE A MATRICE CERAMIQUE CONTENANT DU SILICIUM, PROTEGEE CONTRE LA CORROSION**
KORROSIONSGESCHÜTZTES VERBUNDWERKSTOFFTEIL MIT SILICIUMHALTIGER KERAMIKMATRIX
COMPOSITE MATERIAL PART WITH A SILICON-CONTAINING CERAMIC MATRIX PROTECTED AGAINST CORROSION

(30) Priorité: 18.12.2006 FR 0655578
(43) Date de publication de la demande: 30.09.2009
(73) Titulaire: Snecma Propulsion Solide, 33187 Le Haillan Cedex (FR)
(72) Inventeur: LOUCHET-POUILLERIE, Caroline, 33460 Arsac (FR); TAWIL, Henri, 33110 Le Bouscat (FR); BOUILLON, Eric, 33185 Le Haillan (FR)
(74) Mandataire: Joly, Jean-Jacques
(86) Numéro de dépôt international: PCT/FR2007/052447
(87) Numéro de publication internationale: WO 2008/078024

(56) Documents cités:
- EP-A- 0 310 043
- US-B2- 6 787 195

## Description

### Arrière-plan de l'invention

La présente invention concerne la protection contre la corrosion de pièces en matériau composite à matrice céramique (CMC) contenant du silicium, notamment les pièces en matériau CMC à matrice au moins partiellement en carbure de silicium (SiC). Un domaine particulier d'application de l'invention est celui de pièces de parties chaudes de turbines à gaz, telles que des parois de chambres de combustion, anneaux de turbines, ou distributeurs de turbines, pour des moteurs aéronautiques ou des turbines industrielles.

Pour de telles turbines à gaz, le souci d'améliorer le rendement et de réduire les émissions polluantes conduit à envisager des températures toujours plus élevées dans les chambres de combustion.

Il a donc été proposé de remplacer les matériaux métalliques par des matériaux CMC, notamment pour des parois de chambres de combustion ou anneaux de turbine. En effet, les matériaux CMC sont connus pour posséder à la fois de bonnes propriétés mécaniques permettant leur utilisation pour des éléments de structure et la capacité de conserver ces propriétés à des températures élevées. Les matériaux CMC comportent un renfort fibreux en fibres réfractaires, typiquement en carbone ou en céramique, qui est densifié par une matrice céramique, typiquement en SiC.

Dans un environnement corrosif (atmosphère oxydante, notamment en présence d'humidité et/ou d'atmosphère saline), un phénomène de récession de surface est observé avec les matériaux CMC à matrice SiC en raison de la volatilisation de la silice (SiO₂) qui se forme par oxydation à la surface du matériau CMC.

La formation d'une barrière environnementale à la surface du matériau CMC a été préconisée. Dans une telle barrière connue pour un substrat en matériau CMC à matrice SiC, la fonction anti-corrosion est apportée par une couche en un composé de type aluminosilicate de métal alcalino-terreux, tel que le composé BaO_{0,75} . SrO_{0,25} . Al₂O₃ (SiO₂)₂ désigné couramment sous l'abréviation BSAS. Une couche de barrière chimique mixte formée d'un mélange de BSAS et de mullite est interposée entre le substrat et la couche anti-corrosion pour éviter des interactions chimiques entre le BSAS de la couche anti-corrosion et la silice formée par oxydation de la couche finale SiC du substrat. Une couche de silicium est formée sur le substrat pour permettre l'accrochage de la couche mixte de barrière chimique mullite + BSAS. Une telle barrière environnementale illustrée très schématiquement par la figure 1 est décrite notamment dans les documents US 6 866 897 et US 6 787 195. L'introduction d'une quantité minoritaire de BSAS dans la couche mixte de barrière chimique permet de réduire de façon importante la sensibilité de cette couche à la fissuration, en comparaison avec une couche de barrière chimique formée de mullite seule. Les différentes couches sont typiquement formées par dépôt physique, notamment par plasma thermique.

Un comportement satisfaisant de cette barrière environnementale a été observé à des températures atteignant 1200°C environ mais une dégradation significative est observée lorsque la température dépasse 1300°C. En effet, il a été constaté que vers 1310°C une interaction chimique se produit entre le BSAS de la couche mixte de barrière chimique et la silice formée par oxydation de la couche d'accrochage en silicium, aboutissant à une décohésion assez rapide de la barrière environnementale. Il a été constaté en outre que les contraintes internes induites par les différences de comportement thermique entre les couches de la barrière environnementale rendent la couche d'accrochage en silicium particulièrement sensible à la fissuration.

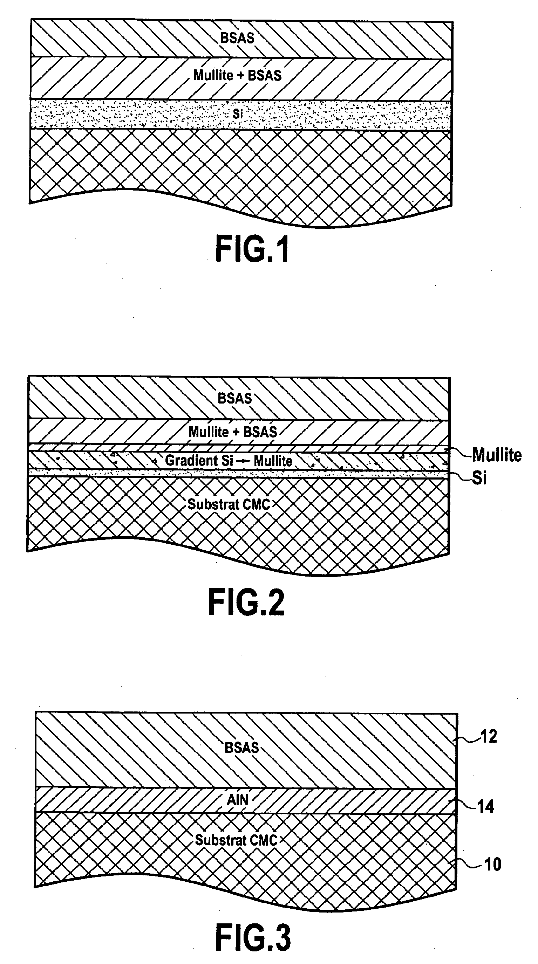

Il a été proposé par la déposante dans la demande de brevet FR 06 51180 de remplacer la couche d'accrochage en silicium par une couche à gradient de composition entre silicium pur, au niveau du substrat, et mullite, au contact de la couche mixte de barrière chimique, comme montré très schématiquement par la figure 2. Un tel gradient de composition permet d'accommoder les contraintes internes d'origine thermique et, par conséquent, de réduire de façon significative la sensibilité à la fissuration de la partie interne en silicium pur et de la partie externe en mullite pure. Cette dernière pouvant alors assurer de façon efficace une fonction de barrière chimique en dépit d'une épaisseur limitée, une utilisation satisfaisante au-delà de 1300°C est possible.

On aboutit toutefois à un accroissement du nombre des dépôts formant la barrière environnementale. Le processus de fabrication s'en trouve allongé. En outre, l'épaisseur totale devient importante d'autant que la couche anti-corrosion est sensible à un phénomène de récession de surface par volatilisation de la silice qu'elle contient, phénomène qui ne peut être compensé que par une augmentation de son épaisseur.

### Objet et résumé de l'invention

L'invention vise à proposer un procédé de formation d'une barrière environnementale sur un substrat en matériau CMC contenant du silicium avec un nombre limité de couches constitutives tout en présentant un bon comportement de façon durable en atmosphère corrosive et à des températures dépassant 1300°C.

Ce but est atteint grâce à un procédé comprenant la formation d'une couche extérieure de protection anti-corrosion contenant un composé du type aluminosilicate d'élément alcalin ou alcalino-terreux ou de terre rare, procédé dans lequel on interpose une couche de nitrure d'aluminium formant barrière chimique entre le substrat et la couche de protection anti-corrosion.

Avantageusement, la couche de nitrure d'aluminium est formée directement sur le substrat et la couche de protection anti-corrosion est formée directement sur la couche de nitrure d'aluminium.

De façon remarquable, la déposante a pu mettre en évidence qu'une couche unique de nitrure d'aluminium AIN entre le substrat en CMC à matrice contenant du silicium et une couche de protection anti-corrosion de type BSAS par exemple assure à la fois l'accrochage de la barrière environnementale sur le substrat et la fonction de barrière chimique entre le substrat et la couche anti-corrosion tout en ayant un coefficient de dilatation thermique voisin de ceux du substrat et de la couche anti-corrosion, évitant ainsi la génération de contraintes internes fortes sources de fissuration.

Une épaisseur suffisante de la couche d'AIN doit être prévue pour bien assurer la fonction de barrière chimique, sans toutefois qu'il soit nécessaire d'avoir une couche très épaisse. De préférence, l'épaisseur de la couche d'AIN est comprise entre 10 microns et 100 microns environ. On peut ainsi disposer d'une marge appréciable d'augmentation de l'épaisseur de la couche anti-corrosion, pour compenser la récession due à la volatilisation de la silice qu'elle contient, sans que cela se traduise par des augmentations d'épaisseur et de masse totales importantes en comparaison avec les barrières environnementales à nombreuses couches de l'art antérieur.

La simplification de la structure avec une couche d'AIN d'épaisseur limitée entre le substrat et la couche de protection anti-corrosion est aussi particulièrement avantageuse dans le cas où une couche extérieure supplémentaire est formée sur la couche de protection anti-corrosion, l'épaisseur et la masse totales du revêtement pouvant rester dans des limites raisonnables. Une telle couche extérieure peut par exemple être une couche de barrière thermique ou une couche de matériau abradable dans le cas d'une application à un anneau de turbine dans une turbine à gaz.

Le dépôt de la couche d'AIN peut être effectué par différentes techniques. De préférence, la couche d'AIN est formée par un processus de dépôt chimique en phase gazeuse, ou CVD ("Chemical Vapor Deposition"), qui permet de former une couche régulière d'épaisseur relativement faible et bien contrôlée, notamment un processus CVD assisté par plasma.

L'invention vise aussi une pièce comportant un substrat en matériau composite à matrice céramique contenant du silicium et une barrière environnementale formée sur le substrat et comprenant une couche de protection anti-corrosion contenant un composé du type aluminosilicate d'élément alcalin ou alcalino-terreux ou de terre rare, barrière dans laquelle une couche de nitrure d'aluminium est interposée entre le substrat et la couche de protection anti-corrosion.

Avantageusement, la couche de nitrure d'aluminium est formée directement sur le substrat et la couche de protection anti-corrosion est formée directement sur la couche de nitrure d'aluminium.

Avantageusement encore, la couche de nitrure d'aluminium a une épaisseur comprise entre 10 microns et 100 microns environ.

L'invention vise notamment la protection de substrats en CMC dans lesquels au moins une phase externe de la matrice du matériau composite comprend du carbure de silicium ou un système ternaire silicium-bore-carbone.

Selon un mode de réalisation, la couche de protection anti-corrosion est en un aluminosilicate de baryum et strontium (BSAS).

L'invention vise aussi des pièces munies d'une barrière environnementale obtenue conformément à l'invention, notamment des composants de parties chaudes de turbines à gaz, en particulier pour des moteurs aéronautiques ou des turbines industrielles.

Lesdites pièces pourront être munies en outre d'une couche extérieure formant barrière thermique, par exemple en alumine, zircone ou zircone yttriée, ou formant un revêtement abradable, notamment pour un anneau de turbine de turbine à gaz.

### Brève description des dessins

L'invention sera mieux comprise à la lecture de la description faite ci-après, à titre indicatif mais non limitatif, en référence aux dessins annexés sur lesquels :
- les figures 1 et 2, déjà décrites, illustrent très schématiquement et en coupe des modes de réalisation antérieurs de barrières environnementales ;
- la figure 3 illustre très schématiquement et en coupe une pièce en matériau CMC contenant du silicium munie d'une barrière environnementale selon un mode de réalisation de l'invention ;
- les figures 4 et 5 sont des microphotographies de coupes d'une éprouvette de matériau en CMC munie d'une barrière environnementale selon un mode de réalisation de réalisation de l'invention et ayant subi des chocs thermiques ; et
- les figures 6 et 7 sont des microphotographies de coupes d'éprouvettes de matériau CMC munies d'une barrière environnementale selon un mode de réalisation de l'invention et ayant été exposées à une atmosphère corrosive.

### Description détaillée de modes de réalisation

La figure 3 montre très schématiquement un substrat 10 muni d'une barrière environnementale selon un mode de réalisation de la présente invention.

Le substrat 10 est en un matériau CMC contenant du silicium. Le renfort fibreux du matériau CMC peut être en fibres de carbone (C) ou en fibres de céramique, notamment en fibres SiC. Les fibres SiC peuvent être revêtues d'une mince couche d'interphase en carbone pyrolytique (PyC) ou en nitrure de bore (BN), comme bien connu en soi. La matrice du matériau CMC est constituée par un composé de Si, notamment SiC ou un système ternaire Si-B-C, dans son intégralité ou, au moins partiellement, dans une phase de matrice externe. Par phase de matrice externe, on entend une phase de matrice formée en dernier, la plus éloignée des fibres du renfort. Dans ce dernier cas, la matrice peut être formée de plusieurs phases de natures différentes par exemple :
une matrice mixte C-SiC (le SiC étant du côté externe), ou
une matrice séquencée avec une alternance de phases SiC et de phases de matrice de moindre rigidité, par exemple en carbone pyrolytique (PyC), nitrure de bore (BN) ou carbone dopé au bore (BC), avec une phase terminale de matrice en SiC, ou
une matrice auto-cicatrisante avec des phases de matrice en carbure de bore (B₄C) ou en un système ternaire Si-B-C, éventuellement avec carbone libre (B₄C + C, Si-B-C + C), et avec une phase terminale Si-B-C ou SiC.

De tels matériaux CMC sont décrits notamment dans les documents US 5 246 736, US 5 965 266, US 6 291 058 et US 6 068 930.

La barrière environnementale comprend une couche de protection anti-corrosion 12 et une couche d'AIN 14 formant barrière chimique entre le substrat 10 et la couche 12.

La couche de protection anti-corrosion 12 est ici en un composé de type aluminosilicate d'élément alcalin ou alcalino-terreux, tel que BSAS. D'autres composés peuvent être envisagés, tels que CaO.Al₂O₃.(SiO₂)₂, ou CAS, (MgO)₂.(Al₂O₃)₂.(SiO₂)₅ ou MAS, BaO.Al₂O₃.SiO₂ ou BAS, SrO.Al₂O₃.SiO₂ ou SAS, 35BaO.15CaO.5Al₂O₃.10B₂O₃.35SiO₂, ou BCAS, ou encore des aluminosilicates d'éléments choisis parmi des terres rares, tous désignés ici par "composés de type aluminosilicate d'éléments alcalins ou alcalino-terreux ou de terres rares".

La couche d'AIN 14 constitue une barrière chimique s'opposant à une réaction entre le silicium du substrat 10 et le composé de la couche de protection anti-corrosion 12. L'épaisseur de la couche d'AIN est de préférence comprise entre 10 microns et 100 microns environ, une épaisseur supérieure n'apportant pas d'amélioration significative pour la fonction de barrière chimique.

L'épaisseur limitée de la couche d'AIN et le fait qu'elle peut constituer avantageusement la seule couche intermédiaire entre le substrat 10 et la couche de protection anti-corrosion 12 fait que l'on peut conférer à cette dernière une épaisseur relativement élevée sans inconvénient important en terme de masse. L'épaisseur de la couche 12 peut ainsi être largement supérieure à 100 microns, par exemple atteindre 400 microns voire plus, ce qui permet de lui conférer une durée de vie importante en dépit de la récession par volatilisation de la silice qu'elle contient au delà de 1300°C environ.

De plus, la couche d'AIN 14 assure une fonction supplémentaire d'accrochage de la barrière environnementale sur le substrat 10.

De plus encore, la couche d'AIN 14 présente un coefficient de dilatation voisin de ceux des matériaux qui constituent typiquement la matrice céramique du substrat (notamment SiC) et la couche 12 de type aluminosilicate (notamment BSAS), ce qui limite le risque de fissuration par contraintes internes d'origine thermique.

Ainsi, avec une structure simple, on préserve de façon efficace la fonction anti-corrosion de la couche 12, à savoir la protection du substrat aux températures élevées (pouvant dépasser 1300°C) en atmosphère corrosive (humidité) et sous des pressions élevées, conditions auxquelles sont exposés notamment des composants de turbines à gaz tels des parois de chambre de combustion ou des anneaux ou distributeurs de turbines, notamment pour moteurs aéronautiques.

Le dépôt de la couche d'AIN 14 est avantageusement effectué par dépôt chimique en phase gazeuse, ou CVD, notamment par un processus de CVD assisté par plasma, ou PE-CVD ("Plasma-Enhanced Chemical Vapor Deposition"). L'utilisation d'un processus CVD permet la formation d'une couche régulière d'épaisseur bien contrôlée. Des processus type CVD permettant la formation de dépôt AIN sont bien connus. On pourra utiliser une phase gazeuse réactive contenant du chlorure d'aluminium et du gaz ammoniac. D'autres processus de dépôt peuvent toutefois être envisagés, notamment des processus de dépôt physique en phase gazeuse, ou PVD ("Physical Vapor Deposition").

Des processus de type PVD ou des processus de dépôt par projection plasma peuvent être utilisés pour former la couche de protection anti-corrosion 12. Un dépôt à partir de poudres en suspension dans un liquide pourrait aussi être envisagé pour cette couche 12.

Dans certaines applications, une couche externe pourra être formée sur la couche de protection anti-corrosion 12. Une telle couche externe peut être par exemple une couche de barrière thermique, par exemple en alumine, zircone ou zircone stabilisée par de l'yttrium (zircone yttriée), ou une couche de matériau abradable dans le cas notamment de l'application à des anneaux de turbines de turbines à gaz.

### Exemple

Des éprouvettes ou substrats en matériau CMC ont été réalisées par formation d'un renfort fibreux multicouches en fibres SiC commercialisées par la société japonaise Nippon Carbon sous l'appellation "Hi-Nicalon" et densification du renfort fibreux par une matrice SiC obtenue par infiltration chimique en phase gazeuse, ou CVI ("Chemical Vapor Infiltration"). Un procédé de formation d'un tel matériau avec dépôt par CVI d'une couche mince d'interphase PyC entre fibres et matrice est bien connu.

Une couche d'AIN de 30 microns d'épaisseur environ a été déposée par CVD assisté plasma sur les éprouvettes en matériau CMC, permettant la formation d'une couche de composition homogène adhérant bien aux substrats.

Une couche de BSAS de 150 microns d'épaisseur environ ensuite a été formée par plasma thermique, conduisant à l'obtention d'une couche adhérant bien à la couche d'AIN.

Un traitement thermique de recuit sous air à 1300°C environ a ensuite été effectué pour transformer la couche de BSAS sous la forme cristalline celsian qui présente une bonne stabilité structurale et un coefficient de dilatation proche de celui du substrat. On notera qu'un tel traitement thermique est toutefois optionnel.

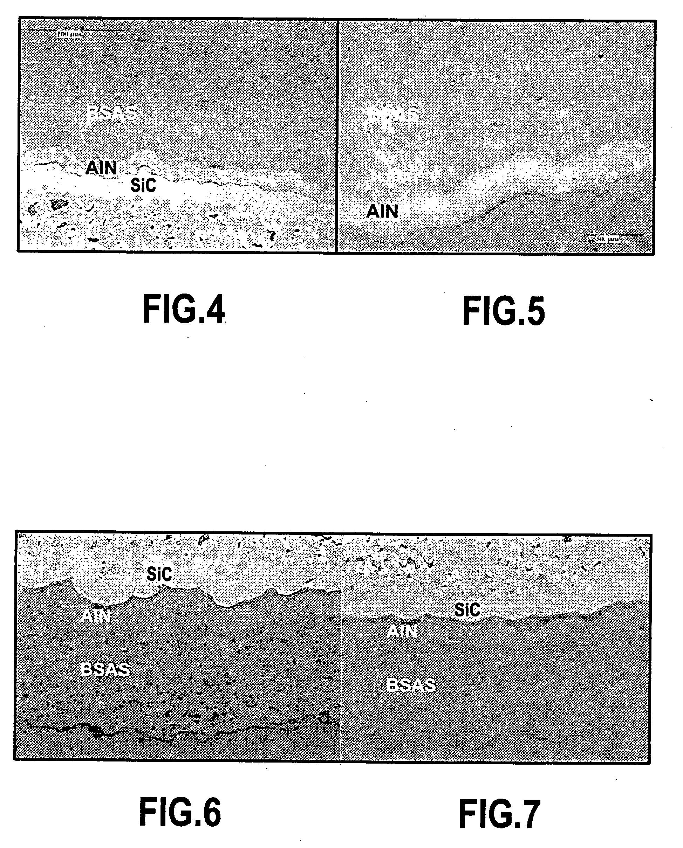

Un essai de tenue aux chocs thermiques a ensuite été effectué sur une éprouvette E1 munie de la barrière environnementale, l'essai étant constitué de 5 cycles comprenant l'introduction dans un four à 1200°C et le retour à température ambiante. Après ces chocs thermiques, il a été constaté que l'adhésion de la barrière environnementale sur le matériau CMC a bien été conservée, comme le montrent les figures 4 et 5, à deux échelles différentes.

Sur les figures 4 et 5, la couche d'AIN est ancrée sur le film de SiC (ou "seal coat") formé lors du processus de densification de l'éprouvette en CMC, dans la continuité de la matrice SiC.

Deux autres éprouvettes E2, E3 obtenues après traitement thermique de recuit ont été soumises à des traitements de corrosion par exposition sous atmosphère d'air humide (45 % d'air et 65 % de vapeur d'eau), respectivement pendant 500 h à 1 200°C et pendant 120 h à 1400°C. Les figures 6 et 7 relatives aux éprouvettes E2, E3, respectivement, montrent que l'intégrité de la barrière environnementale a bien été conservée à de tels niveaux de température en atmosphère corrosive.

## Revendications

1. Procédé de formation d'une barrière environnementale sur un substrat en matériau composite à matrice céramique contenant du silicium, le procédé comprenant la formation d'une couche de protection anti-corrosion contenant un composé du type aluminosilicate d'élément alcalin ou alcalino-terreux ou de terre rare,
**caractérisé en ce que** l'on interpose une couche de nitrure d'aluminium formant barrière chimique entre le substrat et la couche de protection anti-corrosion.

2. Procédé selon la revendication 1, **caractérisé en ce que** la couche de nitrure d'aluminium est formée directement sur le substrat et la couche de protection anti-corrosion est formée directement sur la couche de nitrure d'aluminium.

3. Procédé selon l'une quelconque des revendications 1 et 2, **caractérisé en ce que** l'on forme une couche de nitrure d'aluminium d'épaisseur comprise entre 10 microns et 100 microns environ.

4. Procédé selon l'une quelconque des revendications 1 à 3, **caractérisé en ce que** la couche de nitrure d'aluminium est formée par un processus de dépôt chimique en phase gazeuse.

5. Procédé selon l'une quelconque des revendications 1 à 4, **caractérisé en ce que** la couche de nitrure d'aluminium est formée par un processus de dépôt chimique en phase gazeuse assisté par plasma.

6. Pièce comportant un substrat en matériau composite à matrice céramique contenant du silicium et une barrière environnementale formée sur le substrat et comprenant une couche de protection anti-corrosion contenant un composé du type aluminosilicate d'élément alcalin ou alcalino-terreux ou de terre rare,
**caractérisée en ce qu'**une couche de nitrure d'aluminium est interposée entre le substrat et la couche de protection anti-corrosion.

7. Pièce selon la revendication 6, **caractérisée en ce que** la couche de nitrure d'aluminium est formée directement sur le substrat et la couche de protection anti-corrosion est formée directement sur la couche de nitrure d'aluminium.

8. Pièce selon l'une quelconque des revendications 6 et 7, **caractérisée en ce que** la couche de nitrure d'aluminium a une épaisseur comprise entre 10 microns et 100 microns environ.

9. Pièce selon l'une quelconque des revendications 6 à 8, **caractérisée en ce qu'**au moins une phase externe de la matrice du matériau composite comprend du carbure de silicium ou un système ternaire silicium-bore-carbone.

10. Pièce selon l'une quelconque des revendications 6 à 9, **caractérisée en ce que** la couche de protection anti-corrosion est en un aluminosilicate de baryum et strontium (BSAS).

11. Pièce selon la revendication 10, **caractérisée en ce qu'**elle est munie en outre d'une couche extérieure formant barrière thermique.

12. Composant de partie chaude de turbine à gaz industrielle ou aéronautique constitué par une pièce selon l'une quelconque des revendications 6 à 11.

13. Composant selon la revendication 12 formant anneau de turbine, **caractérisé en ce qu'**il est muni en outre d'une couche extérieure de matériau abradable.

## Claims

1. A method of forming an environmental barrier on a substrate of ceramic matrix composite material containing silicon, the method comprising forming an anticorrosion protection layer containing an aluminosilicate type compound of an alkali or alkaline-earth or rare earth element, the method being **characterized in that** a chemical barrier forming layer of aluminum nitride is interposed between the substrate and the anticorrosion protection layer.

2. A method according to claim 1, **characterized in that** the aluminum nitride layer is formed directly on the substrate and the anticorrosion protection layer is formed directly on the aluminum nitride layer.

3. A method according to claim 1 or claim 2, **characterized in that** an aluminum nitride layer is formed having a thickness lying in the range 10 µm to 100 µm, approximately.

4. A method according to any one of claims 1 to 3, **characterized in that** the aluminum nitride layer is formed by a chemical vapor deposition process.

5. A method according to any one of claims 1 to 4, **characterized in that** the aluminum nitride layer is formed by a plasma-enhanced chemical vapor deposition process.

6. A part comprising a composite material substrate with a ceramic matrix containing silicon and an environmental barrier formed on the substrate and comprising an anticorrosion protection layer containing an aluminosilicate type compound of an alkali or alkaline-earth or rare-earth element, the part being **characterized in that** a layer of aluminum nitride is interposed between the substrate and the anticorrosion protection layer.

7. A part according to claim 6, **characterized in that** the aluminum nitride layer is formed directly on the substrate and the anticorrosion protection layer is formed directly on the aluminum nitride layer.

8. A part according to claim 6 or claim 7, **characterized in that** the layer of aluminum nitride is of thickness lying in the range 10 µm to 100 µm, approximately.

9. A part according to any one of claims 6 to 8, **characterized in that** at least one outer phase of the composite material matrix comprises silicon carbide or a ternary silicon-boron-carbon system.

10. A part according to any one of claims 6 to 9, **characterized in that** the anticorrosion protection layer is a barium and strontium aluminosilicate (BSAS).

11. A part according to claim 10, **characterized in that** it is also provided with an outer layer forming a thermal barrier.

12. A component for the hot portion of an industrial or aviation gas turbine, the component being constituted by a part according to any one of claims 6 to 11.

13. A component according to claim 12 forming a turbine ring, and **characterized in that** it is also provided with an outer layer of abradable material.

## Patentansprüche

1. Verfahren zur Ausbildung einer Umweltbarriere auf einem Substrat aus siliziumhaltigen Keramikmatrix-Verbundwerkstoff, wobei das Verfahren die Ausbildung einer Korrosionsschutzschicht umfaßt, die eine Verbindung vom Typ Aluminosilikat eines Alkali- oder Erdalkali- oder Seltenerdelements enthält, **dadurch gekennzeichnet, daß** eine eine chemische Barriere bildende Schicht aus Aluminiumnitrid zwischen dem Substrat und der Korrosionsschutzschicht eingefügt wird.

2. Verfahren nach Anspruch 1, **dadurch gekennzeichnet, daß** die Aluminiumnitridschicht direkt auf dem Substrat gebildet wird und die Korrosionsschutzschicht direkt auf der Aluminiumnitridschicht gebildet wird.

3. Verfahren nach einem der Ansprüche 1 und 2, **dadurch gekennzeichnet, daß** eine Aluminiumnitridschicht mit einer Dicke zwischen etwa 10 Mikrometern und 100 Mikrometern gebildet wird.

4. Verfahren nach einem der Ansprüche 1 bis 3, **dadurch gekennzeichnet, daß** die Aluminiumnitridschicht mittels eines chemischen Gasphasenabscheidungsverfahrens gebildet wird.

5. Verfahren nach einem der Ansprüche 1 bis 4, **dadurch gekennzeichnet, daß** die Aluminiumnitridschicht mittels eines plasmaunterstützten chemischen Gasphasenabscheidungsverfahrens gebildet wird.

6. Teil umfassend ein Substrat aus siliziumhaltigen Keramikmatrix-Verbundwerkstoff und eine Umweltbarriere, die auf dem Substrat ausgebildet ist und eine Korrosionsschutzschicht umfaßt, welche eine Verbindung vom Typ Aluminosilikat eines Alkali- oder Erdalkali- oder Seltenerdelements enthält, **dadurch gekennzeichnet, daß** eine Schicht aus Aluminiumnitrid zwischen dem Substrat und der Korrosionsschutzschicht eingefügt wird.

7. Teil nach Anspruch 6, **dadurch gekennzeichnet, daß** die Aluminiumnitridschicht direkt auf dem Substrat gebildet wird und die Korrosionsschutzschicht direkt auf der Aluminiumnitridschicht gebildet wird.

8. Teil nach einem der Ansprüche 6 und 7, **dadurch gekennzeichnet, daß** die Aluminiumnitridschicht eine Dicke zwischen etwa 10 Mikrometern und 100 Mikrometern aufweist.

9. Teil nach einem der Ansprüche 6 bis 8, **dadurch gekennzeichnet, daß** wenigstens eine äußere Phase der Matrix des Verbundwerkstoffs Siliziumkarbid oder ein ternäres Silizium-Bor-Kohlenstoff-System umfaßt.

10. Teil nach einem der Ansprüche 6 bis 9, **dadurch gekennzeichnet, daß** die Korrosionsschutzschicht aus einem Barium- und Strontium-Aluminosilikat (BSAS) besteht.

11. Teil nach Anspruch 10, **dadurch gekennzeichnet, daß** es ferner mit einer eine Wärmebarriere bildenden Außenschicht versehen ist.

12. Bestandteil eines heißen Teils einer in der Industrie oder Luftfahrt eingesetzten Gasturbine, das von einem Teil nach einem der Ansprüche 6 bis 11 gebildet ist.

13. Bestandteil nach Anspruch 12, das einen Turbinenring bildet, **dadurch gekennzeichnet, daß** es ferner mit einer Außenschicht aus Abriebmaterial versehen ist.
